# EUROPÄISCHE PATENTANMELDUNG

(11) **EP 1 881 026 A2**
(43) Veröffentlichungstag der Anmeldung: **23.01.2008**
(21) Anmeldenummer: 07108194.7
(22) Anmeldetag: 15.05.2007
(51) Int. Cl.: C08L 21/00, C08K 5/01, C08K 9/10, B60C 1/00

(54) **Kautschukmischung**

(30) Priorität: 19.07.2006 DE 102006033350
(71) Anmelder: Continental Aktiengesellschaft, 30165 Hannover (DE)
(72) Erfinder: Kramer, Thomas, 31832, Springe (DE); Carl, Wilfried, 12159, Berlin (DE); Schulze, Herbert, 30179, Hannover (DE)

(57) **Zusammenfassung**

Die Erfindung betrifft eine mit Schwefel vulkanisierbare Kautschukmischung, die zumindest einen Latentwärmespeicher enthält.

## Beschreibung

### Kautschukmischung

Die Erfindung betrifft eine mit Schwefel vulkanisierbare Kautschukmischung. Ferner betrifft die Erfindung einen Reifen bzw. einen Reifenrohling mit wenigstens einem Bauteil, das bei dynamischer Wechselbelastung Temperaturspitzen aufweist und aus der mit Schwefel vulkanisierten Kautschukmischung besteht.

Da die Eigenschaften eines Reifens in einem großen Umfang von den mit Schwefel vulkanisierbaren Kautschukzusammensetzungen der diversen Reifenbauteile, aber auch von ihren Vulkanisationsverfahren abhängig sind, werden besonders hohe Anforderungen an die Zusammensetzung der Kautschukmischungen sowie die Art des Vulkanisationsverfahrens hinsichtlich der veränderbaren Parameter Temperatur, Druck und Dauer gestellt. Dabei muss berücksichtigt werden, dass eine Verbesserung in der einen Reifeneigenschaft oft eine Verschlechterung einer anderen Eigenschaft mit sich bringt.

Bei der Vulkanisation wird der Reifenrohling in einer entsprechenden Vulkanisationsform ausvulkanisiert und erhält somit seine endgültige Gestalt. Hierzu wird der Reifenrohling in einer Reifenvulkanisierpresse unter Verwendung eines im Inneren des Reifenrohlings angeordneten Heizbalges vulkanisiert. Diese Vulkanisation erfolgt üblicherweise nach dem Steam-Inertgas-Verfahren, bei dem nach dem Schließen der Vulkanisierpresse der zunächst "eingefaltete" Heizbalg durch einen überhitzten Dampf gefüllt und unter Druck von bis zu 22 bar zur Anlage an die Innenseite des Reifenrohlings gebracht wird. Die Energie zur Wärmung und zur Anfangsvernetzung wird hierbei über den Dampf und den Heizbalg eingebracht und weiter durch die anschließenden Gummivolumina geleitet, so dass mit zunehmender Zeit die Erwärmung nach außen hin fortschreiten kann. Gleichzeitig erfolgt auf der Außenseite des Rohlings durch die geheizten Matrizen- Segmente der Reifenvulkanisierpresse eine solche Temperaturführung, dass auch auf und ausgehend von der Außenseite des Reifenrohlings eine zunehmende Vernetzung und Vulkanisation erfolgt. Die Vulkanisationsdauer und Temperatur beträgt bei einem Reifen üblicherweise etwa 9 - 13 Minuten bei etwa 170-200°C.

Durch das vorgenannte Vulkanisationsverfahren werden einzelne Bereiche des Reifenrohlings durch die Beheizung während der Vulkanisation unterschiedlich beziehungsweise unterschiedlich schnell aufgeheizt. Abhängig von der geometrischen Form und der Materialzusammensetzung besitzt jeder Reifenrohling eine zuletzt vulkanisierende Stelle, die auch kritische Stelle genannt wird. Es ist daher erforderlich, die Beheizung auf diese kritische Stelle abzustimmen.

Dies bedeutet aber wiederum, dass Bereiche, die längst ausvulkanisiert sind, weiterhin erhitzt werden bzw. kurzfristig derart stark beheizt werden müssen, dass die erforderliche Vulkanisationstemperatur überhaupt an der kritischen Stelle erreicht wird. Hinzu kommt, dass möglicherweise während der Vulkanisation auftretende Temperaturschwankungen durch Sicherheitszuschläge bei der Heizzeit berücksichtigt werden müssen, um eine Unterheizung und damit eine nicht vollständige Vulkanisation zu vermeiden.

Bei den vorgenannten Szenarien treten nicht selten Überheizungen durch kurzfristige Temperaturerhöhungen oder auch durch qualitätsmindernde Verlängerungen der Heizzeit auf, die insbesondere die Lebensdauer vulkanisierter Reifen beinträchtigen.

Der Erfindung liegt daher die Aufgabe zugrunde, eine einfache und betriebssichere Möglichkeit zu schaffen, um Überheizungen am Reifen bzw. am Reifenrohling zu vermeiden.

Diese Aufgabe wird auf überraschend einfache Weise dadurch gelöst, dass die mit Schwefel vulkanisierbare Kautschukmischung zumindest einen Latentwärmespeicher enthält.

Durch das erfindungsgemäße Einbringen eines Latentwärmespeichers, der auch als Phase Change Material oder PCM bezeichnet wird, in die mit Schwefel vulkanisierbare Kautschukzusammensetzung wird erreicht, dass die während der Vulkanisation auf den Reifenrohling einwirkenden kurzfristigen Temperaturschwankungen und Temperaturspitzen keinen qualitätsmindernden Einfluss auf das vulkanisierte Endprodukt haben.

Dies ist darauf zurückzuführen, dass bei der Latentwärmespeicherung Wärme in einem Material gespeichert wird, welches einen Phasenübergang, z.B. fest - flüssig, erfährt. Bei der Speicherung der Wärme im Speichermaterial beginnt das Material beim Erreichen der Temperatur des Phasenübergangs zu schmelzen und erhöht dann, trotz weiterer Einspeicherung von Wärme, seine Temperatur nicht, bis das Material komplett geschmolzen ist. Da für längere Zeit trotz Wärmezufuhr keine merkliche Temperaturerhöhung auftritt, wird die während des Phasenübergangs eingespeicherte Wärme auch "versteckte Wärme" bzw. "latente Wärme" genannt.

Es hat sich darüber hinaus als vorteilhaft herausgestellt, dass auch Kautschukmischungen, die nach der Vulkanisation dynamisch beansprucht werden, diese Latentwärmespeicher enthalten. Es hat sich gezeigt, dass diese Kautschukmischungen durch die dynamische Beanspruchung häufig Temperaturspitzen aufweisen oder kurzfristigen Temperaturschwankungen unterworfen sind, die zur Schädigung des Materials führen können. Insbesondere ist dies bei Wechselbelastungen, wie sie z. B. bei Reifen innerhalb der Lauffläche oder der inneren Bauteile, aber auch bei Dämpferelementen aus Kautschuken auftreten können, der Fall.

Die Latentwärmespeicher fangen diese Temperaturspitzen ab und gleichen Temperaturschwankungen aus. Dabei reichen bereits geringe Mengen an Latentwärmespeicher im vulkanisierten Kautschuk aus, um den gewünschten Effekt zu erzielen. Vorteilhaft werden die Latentwärmespeicher bei der dynamischen Beanspruchung nicht verbraucht, da sie beim Aufheizen schmelzen und Wärme aufnehmen, beim Abkühlen aber wieder aushärten und Wärme abgeben. Der Effekt ist also wiederholbar.

Die schwefelvernetzbare Kautschukmischung enthält vorzugsweise zumindest einen Dienkautschuk. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und Styrol-Butadien-Copolymer (SBR). Diese Dienelastomere lassen sich gut zu der erfindungsgemäßen Kautschukmischung verarbeiten und ergeben in den vulkanisierten Reifen gute Reifeneigenschaften.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil >90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich dabei sowohl um cis-1,4- als auch um 1,2-Polybutadien (sowohl in syndiotaktischer als auch in ataktischer Form) handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Bei dem Styrol-Butadien-Copolymer kann es sich um lösungspolymerisiertes Styrol-Butadien-Copolymer (S-SBR) mit einem Styrolgehalt, bezogen auf das Polymer, von ca. 10 bis 45 Gew.-% und einem Vinylgehalt (Gehalt an 1,2-gebundenem Butadien, bezogen auf das gesamte Polymer) von 10 bis 70 Gew.-% handeln, welches zum Beispiel unter Verwendung von Lithiumalkylen in organischem Lösungsmittel hergestellt werden kann. Die S-SBR können auch gekoppelt und endgruppenmodifiziert sein. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Zusätzlich zu den genannten Dienkautschuken kann die Mischung aber auch noch andere Kautschuktypen, wie z. B. Styrol-Isopren-Butadien-Terpolymer, Isopren-Butadien-Kautschuk, Butylkautschuk, Halobutylkautschuk oder Ethylen-Propylen-Dien-Kautschuk (EPDM), enthalten.

Die erfindungsgemäße Kautschukmischung enthält vorzugsweise zumindest einen Füllstoff in üblichen Mengen. Es kann sich dabei z. B. um Russ, Kieselsäure, Aluminiumoxide, Alumosilicate, Aluminiumhydroxid, Schichtsilikate, Kreide, Stärke, Magnesiumoxid, Titandioxid und/oder Kautschukgele in den Fachmann bekannten Mengen handeln. Zur Verbesserung der Verarbeitbarkeit und zur Anbindung eines polaren Füllstoffes kann die Mischung geeignete Kupplungsagenzien, wie z. B. Silan-Kupplungsagenzien, enthalten.

Die erfindungsgemäße Kautschukmischung kann des Weiteren übliche Zusatzstoffe in üblichen Gewichtsteilen enthalten. Zu diesen Zusatzstoffen zählen weitere Weichmacher, Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Harze und Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfiden, Thiophosphaten oder Thiurambeschleunigern. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird.

Der Latentwärmerspeicher kann bereits der Grundmischung, aber auch der Fertigmischung zudosiert werden.

Anschließend wird die Mischung weiterverarbeitet, z. B. durch einen Extrusionsvorgang, und in die entsprechende Form gebracht. Ein so erzeugtes Bauteil wird bei der Herstellung des Reifenrohlings, wie bekannt, verbaut.

Erfindungsgemäß weist der Latentwärmespeicher vorzugsweise einen Schmelzpunkt auf, der unterhalb eines die Kautschukmischung oder die vulkanisierte Kautschukmischung schädigenden Temperaturbereichs liegt. Als geeignet haben sich hierzu gemäß einer Weiterbildung der Erfindung Latentwärmespeicher mit einem Schmelzpunkt erwiesen, der bis zu 120° C beträgt, vorzugsweise zwischen 80 °C und 120 °C liegt.

Eine vorteilhafte Ausgestaltung der Erfindung sieht vor, dass die Kautschukmischung bis zu 15 phr, vorzugsweise von 5 bis 15 phr Latentwärmespeicher enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Es hat sich gezeigt, dass sich bei diesen Anteilen des Latentwärmespeichers in der Kautschukmischung die besten Effekte ergeben, ohne dass andere Eigenschaften der Mischung und der Vulkanisate wesentlich verändert werden.

Als besonders geeignet haben sich Latentwärmespeicher in Form von Paraffinen erwiesen, die vorteilhaft chemisch reaktionsträge und einfach zu handhaben sind.

Die Latentwärmspeicher liegen erfindungsgemäß entweder in unverkapselter und/oder in mikroverkapselter Form vor.

Es hat sich gezeigt, dass bei Verwendung von Latentwärmespeichern in unverkapselter Form, diese in der Matrix der Kautschukmischung auch nach mehrmaligem Erhitzen verbleiben und Bereiche bilden, die aufschmelzen und wieder kristallisieren können. Dies Verhalten ist abweichend zu dem der üblicherweise eingesetzten Lichtschutzwachse.

Es wird davon ausgegangen, dass der unverkapselte Latentwärmespeicher quasi in die Kautschukmischung eingebettet ist, wobei letztere quasi ein Trägermaterial bildet. Während des Phasenwechsels finden die Schmelz- und Erstarrungsprozesse innerhalb des Trägermaterials statt, wobei der Latentwärmespeicher selbst in der Flüssigphase nicht aus dem Trägermaterial austritt.

Obwohl - wie vorstehend erläutert - nicht unbedingt erforderlich, wird durch die Verwendung mikroverkapselter Latentwärmespeicher erreicht, dass die flüssige Phase des Latentwärmespeichers durch eine geschlossene Kapselhülle eingegrenzt wird. Mikroverkapselte Latentwärmespeicher haben aufgrund ihrer geringen Größe Vorteile. So sind sie fließfähig als Pulver oder Dispersion gut dosierbar und besitzen einen guten Wärmeübertrag durch ein hohes Oberfläche / Volumen-Verhältnis.

Der mikroverkapselte Latentwärmespeicher weist vorzugsweise eine polymere Schale im Größenbereich von etwa 2-20 µm Durchmesser auf, deren Wandstärke etwa 100 bis 300 nm beträgt, wobei die Schale vorzugsweise auf Polymethylmethacrylat basiert.

Alternativ zu genannten unverkapselten oder mikroverkapselten Latentwärmespeichern können die Latentwärmespeicher auch als Verbundmaterial und/oder als Speichergranulat ausgebildet sein.

Die Erfindung betrifft ferner einen Reifen mit wenigstens einem Bauteil, das bei dynamischer Wechselbelastung Temperaturspitzen aufweist. Erfindungsgemäß besteht dieses Bauteil aus der mit Schwefel vulkanisierten Kautschukmischung nach einem der Ansprüche 1 bis 8. Eine Weiterbildung sieht vor, dass das Bauteil die Lauffläche, die Gürtelkante und/oder vorzugsweise der Wulst ist.

Weiterhin betrifft die Erfindung ein Dämpferelement mit wenigstens einem Bauteil, das bei dynamischer Wechselbelastung Temperaturspitzen aufweist. Erfindungsgemäß besteht dieses Bauteil aus der mit Schwefel vulkanisierten Kautschukmischung nach einem der Ansprüche 1 bis 8.

Dadurch wird erreicht, dass Temperaturspitzen abgefangen und Temperaturschwankungen ausgeglichen werden. Dabei reichen bereits geringe Mengen an Latentwärmespeicher im vulkanisierten Kautschuk aus, um den gewünschten Effekt zu erzielen. Vorteilhaft werden die Latentwärmespeicher bei der dynamischen Beanspruchung nicht verbraucht, da sie beim Aufheizen schmelzen und Wärme aufnehmen, beim Abkühlen aber wieder aushärten und Wärme abgeben. Der Effekt ist also wiederholbar.

Die Latentwärmespeicher verhindern somit Schädigungen am Reifen oder am Dämpferelement aufgrund von der genannten Temperaturschwankungen und erhöhen somit deren Lebensdauer.

### Ausführungsbeispiel

Die Wirksamkeit des erfindungsgemäß in einer Kautschukmischung enthaltenen Latentwärmespeichers soll anhand von Vergleichs- und Ausführungsbeispielen erläutert werden.

Hierzu wurden Kautschukmischungen hergestellt, die keinen oder einen Latentwärmespeicher enthielten.

Als Latentwärmespeicher wurden zwei unverkapselte Latentwärmespeichermaterialien auf Basis von Paraffinen eingesetzt, welche unter den Bezeichnungen Rubitherm® RT 90 und Rubitherm® RT 100 der Rubitherm GmbH bekannt sind. Nachfolgend werden diese Latentwärmespeicher mit RT 90 und RT 100 bezeichnet.

Als mikroverkapselter Latentwärmespeicher wurde ein Latentwärmespeichermaterial der BASF AG eingesetzt. Dabei handelt es sich um Mikrokapseln mit einer Kapselwand auf Basis von Acrylaten und einem Latentwärmespeicherkern auf Basis von Paraffinen. Nachfolgend wird dieser Latentwärmespeicher mit BASF bezeichnet.

Die Kautschukmischung ohne Latentwärmespeicher bildet das Referenzmaterial und wird nachfolgend mit Ref bezeichnet.

Die Mischungen setzen sich wie folgt zusammen:
a) ohne Latentwärmespeicher
   (= Ref)
   - 100 phr: Naturkautschuk (NR)
   - 48 phr: Ruß
   - ca.5 phr: Zuschlagsstoffe (insbesondere Wachse, Schwefel)
b) mit Latentwärmespeicher
   (= Ref + PCM (RT 90, RT 100 oder BASF)
   - 100 phr: Naturkautschuk (NR)
   - 48 phr: Ruß
   - ca.5 phr: Zuschlagsstoffe (insbesondere Wachse, Schwefel)
   - 5 phr: Latentwärmespeicher

Bei sämtlichen vorgenannten Mischungsbeispielen sind die angegebenen Mengenangaben Gewichtsteile, die auf 100 Gewichtsteile Naturkautschuk bezogen sind (phr).

Die Mischungsherstellung erfolgte unter üblichen Bedingungen in drei Stufen in einem Labortangentialmischer. In einer ersten Stufe wurde die Grundmischung und anschließend in einer zweiten Stufe die Fertigmischung hergestellt. Schließlich wurde in einer dritten Stufe der Latentwärmespeicher in die Fertigmischung eingemischt.

Die unvulkanisierten Proben wurden mittels DSC (Differential Scanning Calorimetry)-vermessen, deren Messkurven in der Zeichnung dargestellt sind. In dieser zeigen
Fig. 1 ein DSC-Diagramm für Ref und für Ref + BASF nach der 2. Aufheizung,
Fig. 2 ein DSC-Diagramm mit 5 DSC-Kuven für Ref beim Durchlaufen von 5 Zyklen (Aufheizen und Abkühlen)
Fig. 3 ein DSC-Diagramm mit 5 DSC-Kuven für Ref + RT 90 beim Durchlaufen von 5 Zyklen (Aufheizen und Abkühlen)
Fig. 4 ein DSC-Diagramm mit 5 DSC-Kuven für Ref + RT 100 beim Durchlaufen von 5 Zyklen (Aufheizen und Abkühlen) und
Fig. 5 ein DSC-Diagramm mit 5 DSC-Kuven für Ref + BASF beim Durchlaufen von 5 Zyklen (Aufheizen und Abkühlen).

Die in den DCS-Diagrammen enthaltene Abkürzung Q ist das Formelzeichen für die Wärmemenge, die vorliegend von einer Probe bei Aufheizung aufgenommen wird.

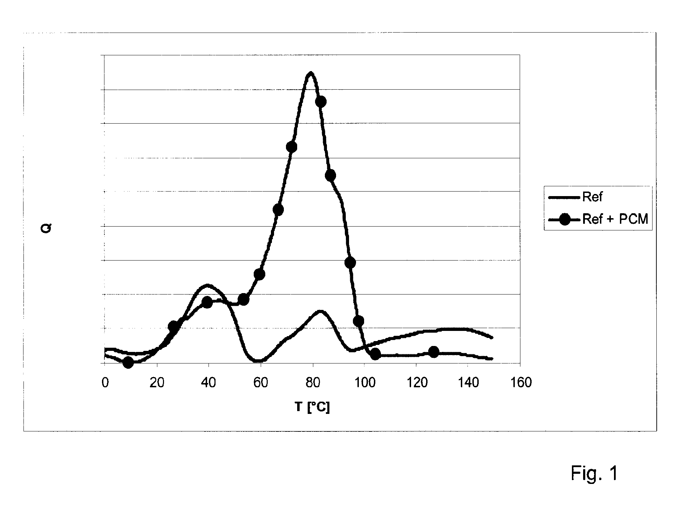

In Fig. 1 ist zu erkennen, dass die Kautschukmischung mit Latentwärmespeicher (Ref + BASF) ab einer Temperatur von etwa 60 °C deutlich mehr Wärme aufnimmt als die im Vergleich gemessene Kautschukmischung ohne Latentwärmespeicher (= Ref.).

Die erhöhte Aufnahme von Wärme ist auf den Latentwärmespeicher zurückzuführen, der beim Erreichen der Temperatur des Phasenübergangs zu schmelzen beginnt. Dies ist etwa bei 60 °C der Fall. Erst wenn das Latentwärmespeichermaterial komplett geschmolzen ist, vorliegend etwa bei 100 °C, verhält sich die Kautschukmischung mit Latentwärmespeicher quasi wieder wie eine Kautschukmischung ohne Latentwärmespeicher. Daraus wird auch deutlich, dass erfindungsgemäß ein Latentwärmerspeicher gewählt werden muss, dessen Schmelzpunkt beim Durchlaufen des kritischen Temperaturbereichs immer wieder überquert werden muss.

Die in Fig. 1 bei der Probe Ref auftretenden Peaks sind auf die in der Kautschukmischung enthaltenen Lichtschutzwachse zurückzuführen, die beim Aufheizen ebenfalls schmelzen, sich jedoch nach mehren Aufheizprozessen in der Kautschukmatrix verteilen, so dass sie schließlich keine Bereiche mehr bilden, die aufschmelzen können.

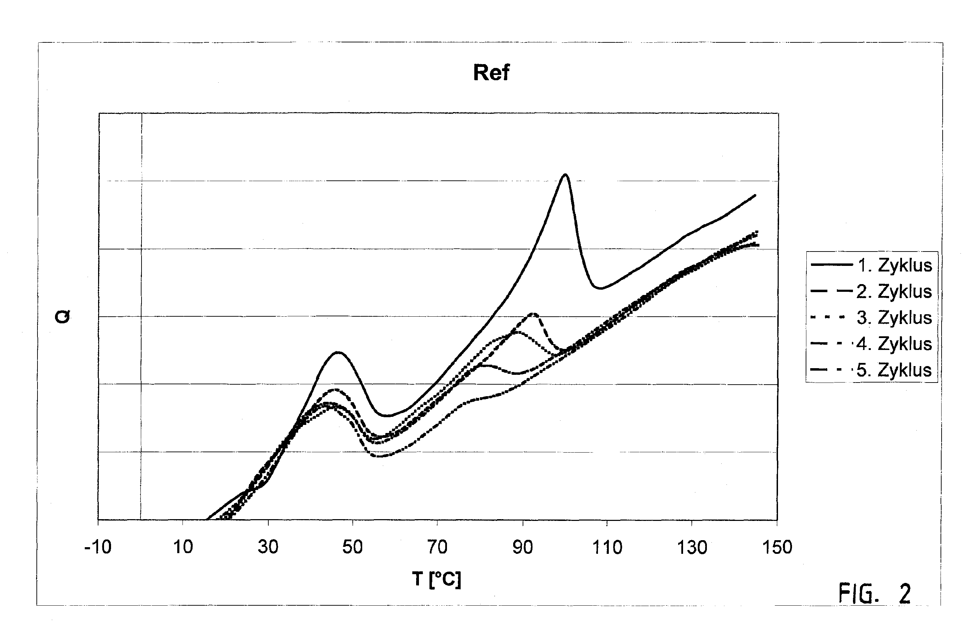

Dieses Phänomen wird eindrucksvoll in Fig. 2 veranschaulicht. Nach mehreren Aufheiz-und Abkühlprozessen flachen die DSC-Kurven immer mehr ab, da sich die genannten Wachse in der Kautschukmatrix verteilt haben.

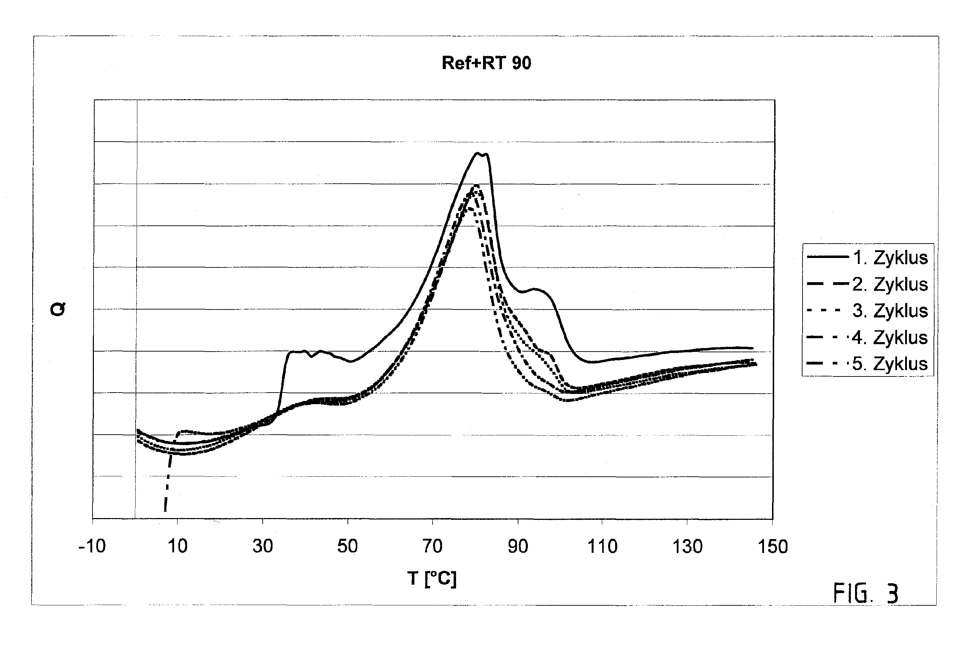

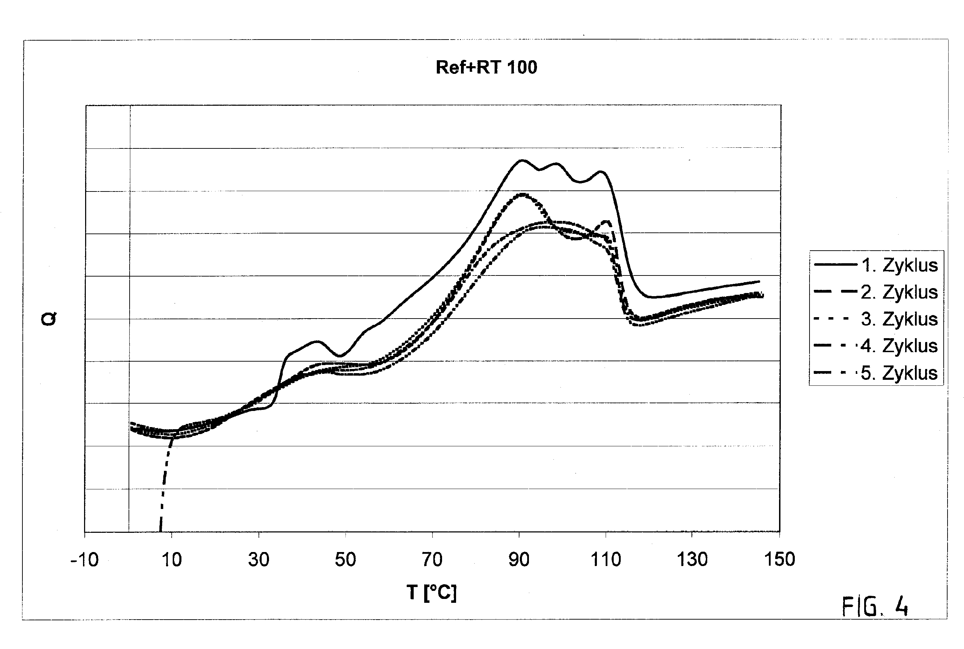

Umso überraschender ist das in den Fig. 3 und 4 dargestellte Ergebnis der DSC-Messungen. Obwohl die Latentwärmespeicher RT 90 und RT 100 - wie auch die genannten Wachse - unverkapselt vorliegen, bleiben sie in der Matrix der Kautschukmischung gebunden und diffundieren nicht wie die genannten Wachse in der Kautschukmischung. Selbst nach 12, vorliegend der Übersichtlichkeit halber nicht dargestellten Zyklen, blieben die Latentwärmespeicher RT 90 und RT 100 in der Matrix gebunden und behalten ihre Wirksamkeit.

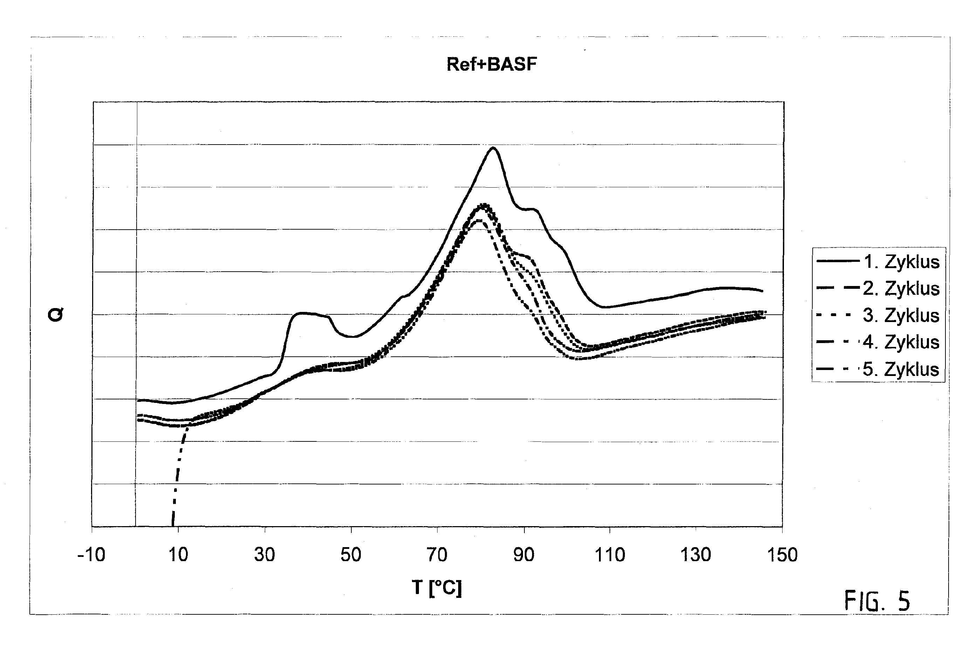

Wie in Fig. 5 dargestellt, gilt dies auch für die mikroverkapselten Latentwärmespeicher.

## Patentansprüche

1. Mit Schwefel vulkanisierbare Kautschukmischung, enthaltend zumindest einen Latentwärmespeicher.

2. Kautschukmischung nach Anspruch 1, **dadurch gekennzeichnet, dass** der Latentwärmespeicher einen Schmelzpunkt aufweist, der unterhalb eines die Kautschukmischung oder die vulkanisierte Kautschukmischung schädigenden Temperaturbereichs liegt.

3. Kautschukmischung nach Anspruch 1 oder 2, **dadurch gekennzeichnet, dass** der Latentwärmespeicher einen Schmelzpunkt aufweist, der bis zu 120 °C beträgt, vorzugsweise zwischen 80 °C und 120 °C liegt.

4. Kautschukmischung nach einem der Ansprüche 1 bis 3, **dadurch gekennzeichnet, dass** diese bis zu 15 phr Latentwärmespeicher enthält.

5. Kautschukmischung nach einem der Ansprüche 1 bis 4, **dadurch gekennzeichnet, dass** der Latentwärmespeicher Paraffine umfasst.

6. Kautschukmischung nach einem der Ansprüche 1 bis 5, **dadurch gekennzeichnet, dass** der Latentwärmespeicher in unverkapselter und/oder in mikroverkapselter Form ausgebildet ist.

7. Kautschukmischung nach einem der Ansprüche 1 bis 5, **dadurch gekennzeichnet, dass** der Latentwärmespeicher als Verbundmaterial und/oder als Speichergranulat ausgebildet ist.

8. Kautschukmischung nach Anspruch 6, **dadurch gekennzeichnet, dass** der mikroverkapselte Latentwärmespeicher eine polymere Schale im Größenbereich von etwa 2-20 µm Durchmesser aufweist, deren Wandstärke etwa 100 bis 300 nm beträgt, wobei die Schale vorzugsweise auf Polymethylmethacrylat basiert.

9. Reifen bzw. Reifenrohling mit wenigstens einem Bauteil, das bei dynamischer Wechselbelastung Temperaturspitzen aufweist, **dadurch gekennzeichnet, dass** das Bauteil aus der mit Schwefel vulkanisierten Kautschukmischung nach einem der Ansprüche 1 bis 8 besteht.

10. Reifen bzw. Reifenrohling nach Anspruch 9, **dadurch gekennzeichnet, dass** das Bauteil die Lauffläche, die Gürtelkante und/oder vorzugsweise der Wulst ist.

11. Dämpferelement mit wenigstens einem Bauteil, das bei dynamischer Wechselbelastung Temperaturspitzen aufweist, **dadurch gekennzeichnet, dass** das Bauteil aus der mit Schwefel vulkanisierten Kautschukmischung nach einem der Ansprüche 1 bis 8 besteht.
